# EUROPEAN PATENT SPECIFICATION

(11) **EP 3 429 344 B1**
(45) Date of publication and mention of the grant of the patent: **05.08.2020**
(21) Application number: 17718744.0
(22) Date of filing: 20.03.2017
(51) Int. Cl.: A01N 1/02, G08B 13/12, G06Q 30/00, G08B 13/08, B01L 3/00, G01N 35/00, B65D 79/02, H04L 9/32, B01L 99/00, G08B 25/10, G06Q 50/30, G08B 21/18, G01N 1/00, G06Q 10/08

(54) **SYSTEM AND METHOD FOR THE TRANSPORT OF GOODS**
SYSTEM UND VERFAHREN ZUM TRANSPORT VON GÜTERN
SYSTÈME ET PROCÉDÉ POUR LE TRANSPORT DE MARCHANDISES

(30) Priority: 18.03.2016 IT UA20161809
(43) Date of publication of application: 23.01.2019
(73) Proprietor: Sefero S.r.l., 16156 Genova (IT)
(72) Inventor: BORASO, Roberto, 16156 Genova (IT); BORASO, Luca, 16035 Rapallo (GE) (IT); GRISONI, Claudio, 00151 Roma (IT); LEONFORTE, Antonio, 00167 Roma (IT)
(74) Representative: Bottino, Giovanni
(86) International application number: PCT/IB2017/051589
(87) International publication number: WO 2017/158579

(56) References cited:
- EP-A1- 2 668 847
- WO-A1-2014/199310
- US-A1- 2005 073 406
- US-A1- 2008 303 663
- US-A1- 2013 154 829

## Description

The present invention relates to a system for transporting goods, according to claim 1.

Particularly, the invention mainly relates to transportation of perishable goods and the containers for transporting them.

It shall be understood that monitoring of transportation conditions is essential to ensure the integrity of the transported goods.

Besides monitoring the physical parameters of the environment inside the housing compartment, one should also consider and assess the stresses experienced by the container and the route that has been covered, to ensure proper transportation of perishable goods.

Therefore, the provision of an efficient system that can monitor the conditions of goods as they are being transported and implement procedures for ensuring transportation quality is of the utmost importance. For example, food goods must be maintained within a given temperature range, and must not be exposed to excessive stress during transport, which is a particularly important requirement, for instance, when shipping sparkling wines.

An important case of transportation of perishable goods is the transportation of biological material.

In recent times, medical testing has been increasingly centralized in large laboratories and structures that can test increasingly great amounts of biological samples collected from a large number of collection centers distributed over large geographic areas.

Since testing is no longer carried out locally, the biological sample that has been locally collected must be delivered to central laboratories in a safe and controlled manner.

This aspect has become of critical importance to ensure not only reliable testing, but also safety of the population, e.g. by preventing the loss of infected samples, and ensuring efficiency and certification of the whole testing process.

As discussed above, the samples may be damaged due to exposure to excessively high temperatures or stresses.

A possible solution relating to the transportation and monitoring of biological samples is described in document EP2668847.

Document EP2668847 discloses a container for carrying biological samples, comprising a location detection device and an inertial sensor for the position of the container, and a control unit which comprises a communications device which is adapted to transmit the data that arrive from the location detection device and from the inertial position sensor to a central unit, the control unit comprising a device for storing the data.

Document US2008303663 discloses a container security device comprising a sensor and a local memory configured to store input from the sensor, wherein the device is configured to detect a breach of a container.

Document US2005073406 discloses a system for monitoring the contents of a closed container. The system includes a sensing system for monitoring the contents of the container; a signal receiving element for receiving sensor data from the sensing system; a control element for analyzing received sensor data; a first transceiver element for receiving signals containing sensor data from within the container and for transmitting those signals outside of the container; and a satellite transceiver element for receiving signals from the first transceiver element and for forwarding the received signals via satellite uplink to a remote location.

Furthermore document US2013154829 relates to a system referring to the monitoring and to the detection of unauthorized opening and/or manumission of a container.

Prior art sample transportation systems cannot realise a certified material delivery procedure that ensures monitoring of the transportation conditions all along the path of the containers, the operators that carry out the transportation, shipment, delivery, opening and closing operations.

In prior art systems, failure to provide proper monitoring does not allow certification of the data detected during transportation.

Therefore, there arises the need to ensure that each biological sample will be treated, during transportation, in such a manner as to ensure given quality standards for testing.

Prior art transportation systems cannot effectively counteract the harmful effects of transportation under poor care or problematic environmental conditions, i.e. a car driving in heavy traffic in the sun, on the samples, and cannot prevent tampering.

Indeed, prior art systems cannot implement a reliable certified procedure for sample transportation, which might ensure the highest quality standards for testing data.

Therefore, there is a yet unfulfilled need in the art for a system for transporting perishable goods that can obviate the above discusses drawbacks of prior art systems.

The present invention fulfills the above purposes by providing a system for transporting goods as described hereinbefore and according to the carachterizing part of claim 1.

Therefore, a first basic parameter is transmitted to the remote unit, to check for proper transportation of the material in the container, i.e. to check the stresses acting on the container.

As more clearly explained by the later-described method of present invention, data may be transmitted to the remote unit in real time, so that such data may be read in real time even while goods are being transported.

Stresses are not the only relevant parameter when checking for proper transportation of goods in the container/s, and further features of the system of the present invention relate to monitoring and transmission of relevant parameters that might allow the transportation system to certify the integrity of the transported goods.

According to a first embodiment, the cover element comprises means for detecting the temperature within the housing compartment.

These temperature detection means allow transmission of the temperature levels to which goods are exposed, to assess whether potentially harmful temperature values have been reached within the housing compartment.

According to an improvement, these detection means may be provided in combination with temperature control means, i.e. means that actively maintain temperature within given values.

Certified transportation cannot be only associated with the physical parameters of the housing compartment and the container, but requires an appropriate procedure to ensure that containers are handled by authorized users and their contents are not tampered or altered during transportation.

For this purpose, in the system of the present invention the cover element comprises closure means for fixation thereof to the container, as well as an actuation unit for actuating the closure means.

The actuation of the closure means is ensured by the provision of authentication means for authenticating at least one user.

The closure means have such a construction as to stably guarantee fixation of the cover element to the container. As a result, any attempt to mechanically force or tamper the container will cause an irreversible and visible change in the parts of the container.

This is a high safety feature of the system of the present invention, as it ensures that sensor-detected data is accurate and that it will be processed and transmitted according to a computerized procedure that complies with the certified procedure

Advantageously, the authentication means cooperate with a user-associated identification device, which identification device communicates with the actuation unit.

The identification device may consist, for example, of a contactless smart card device with encryption features that is associated with each user of the system.

Therefore, the identification device uniquely identifies each user.

Since each user may have specific credentials associated therewith, as the user is recognized through the smart card, he/she will be able to operate on the container according to his/her credentials.

As described hereinafter, the container opening or closing operations will be only actuated upon the simultaneous presence of two identification devices, i.e. by the recognition of two users that have the credentials to open or close the container.

According to a further embodiment, the cover element has means for recognizing the goods within the housing compartment.

This characteristic has a particularly advantageous aspect because, in addition to ensuring that the container is opened by authorized personnel, the system of the present invention can also certify the contents of the container as soon as the cover element closes the container.

As discussed above, a particularly advantageous aspect of the system of the present invention consists in constant monitoring of transportation parameters (position, speed, acceleration, temperature inside and outside the house and compartment of the container, battery charge of the cover element, rotation speed of the fans in the cover element, etc.) and possibly warning whenever parameters do not fall within given ranges.

For this purpose, the system of the present invention comprises a control unit which is adapted to determine whether the data detected by the cover element exceeds threshold values.

According to a further embodiment, in the system of the present invention the cover element has processor means for executing a logic program, which logic program has a unique identification code associated therewith.

Therefore, the logic program will be responsible for the operation of the various above-described parts of the cover element.

The association of such logic program with a unique identification code, allows classification of the logic programs of each container, as well as of the various versions implemented on the same container.

This characteristic allows tracking of the logic program version that sent a given information packet, in case of later analysis.

It shall be noted that the logic program identification code is not associated with the object code, i.e. the binary coding of the instructions of the logic program, but with the identification number of the logic program version.

As an alternative to the version number a digest of the logic program code might be used, as calculated by the processor means during execution of the logic program itself, the code of the instructions for executing the logic program being stored in a protected section of the ROM, that is never updated.

Finally, according to another embodiment of the system of the present invention, the cover element may have a digital signature device, uniquely associated with such cover element,

The provision of such digital signature device can ensure the creation of a digital signature for each data packet that is being sent by a predetermined cover element, such that the data sent by each container may be readily identified.

Furthermore, the creation of a digital signature for the transmitted data affords the recognition of any tamper in the data once it has been transmitted by the container.

This configuration, like the one described above, has advantageous consequences that will be later described.

Preferably, the digital signature device consists of an electronic circuit, particularly a cryptographic processor (CryptoChip), with encryption features and an integrated digital signature, which is adapted to add a digital signature to the transmitted data packet and inserted within the cover element, such that it cannot be removed without tampering the cover element.

The digital signature device uniquely identifies each container, and can add a digital signature to the transmitted data, i.e. can recognize the container from which certain data has been transmitted, and certify that such data has not been tampered after it has been transmitted.

With this configuration, which involves cooperation of the digital signature device, the containers, the remote unit and the identification device, each data set transmitted to the remote unit may be used to uniquely track the container that sent it, to check its integrity, as well as the logic program version contained therein and the users that operated on that container.

In view of the advantageous features of the system of the present invention, it shall be understood that the invention may also address a method of transporting goods that will use the above discussed system, and particularly one or more of the above described features, as taken alone or in combination.

The method comprises the steps of:
a) introducing the goods into at least one container;
b) closing the container;
c) transporting the container;
d) opening the container;
e) removing the goods from the container.

These steps are known and used in any process for transporting goods.

According to the method of the present invention, the step of c) transporting a container includes transmitting predetermined parameters detected by the cover element to at least one remote unit.

This feature affords accurate monitoring of the transportation.

Namely, such transmission occurs in real time, for any user to be able to recall from time to time the transportation conditions to which each container is exposed.

Preferably, the communication between the cover element and the remote unit occurs in HyperText Transfer Protocol or Secure Socket Layer (HTTPS) mode, and/or with any other prior art technique for maintaining an adequate level of data confidentiality.

According to a preferred embodiment, the transmission of the predetermined parameters includes a step preceding the transmission itself, i.e. the step of c1) associating a digital signature generated by the digital signature device with these parameters.

The data sent by the cover element will have a digital signature associated therewith to guarantee its authenticity and allow safe detection of any later alteration thereof.

Indeed, should the remote unit or a tamperer alter the data that have been just transmitted by the cover element, it would have to sign it again with the private key of the container, which is not possible because the private key can by no means be retrieved from the digital signature device.

Furthermore, according to an embodiment of the method of the present invention, the generation of the digital signature comprises associating a unique code of the digital signature device, the unique identification code of the logic program and a timestamp with the aforementioned parameters.

The above discussion clearly shows that the data transmitted by the cover element to the remote unit are only associated with the cover element that transmitted them but also with the logic program installed in the cover element during transmission.

This is a particularly advantageous aspect in case of implementations and updates of the logic program installed on the cover elements: each data unit stored in the remote unit will be uniquely related to the logic program version in use at the time and to its functional features, which will be possibly independently checked and certified.

The above described features prove that the method as described herein fulfills highly demanding data safety requirements, both concerning transmission and generation and preservation of data, by using systematically applied rules, that will prevent data alteration and allow enforcement thereof against third parties.

In addition to the above advantages, there is the possibility of uniquely identifying the logic program, due to the generation of the unique identification code associated with the logic program loaded in the cover element, and the digital signature for the data detected by the container, which is allowed by the digital signature device.

Therefore, the method and system of the present invention implement a number of high value-added safety solutions, which ensure the above-described features and are based on hardware systems and software methods

In order to afford later data use, the transmission of predetermined parameters may include, after transmission, the step of c2) storing the parameters by the remote unit.

Namely, this storage process includes generating a storage code for the stored data.

In combination with this feature, according to a further embodiment, after the step of c2) storing, a step may be provided of c3) adding a timestamp. In this configuration, the data received by the remote unit from all the containers of the system, are collectively packed at predetermined time intervals, and the overall packet is timestamped and signed by an external certification authority, for any further tamper to be highlighted.

According to this variant, the storage code may consist of a data digest generated by the remote unit: the remote unit takes a data packet including all the packets received from all the containers during a predetermined period, calculates a digest therefrom using a dynamic Secure Hash Algorithm (SHA), takes this digest and sends it to an external certification authority, which timestamps it and signs it with its private key.

It will be appreciated that, according to this variant embodiment, the digital signature of the data sent by the cover element has the purpose of providing evidence of any data tampering occurred on data hosted on the server, from the time in which data has been stored on the server to the time in which it has been signed by the external certification authority.

It shall be noted that the method and the system of the present invention may relate to one or more containers, according to the implementation needs of any user.

The parameters detected by the cover element may be of any type, but preferably include accelerations and inclinations acting on the container, the temperature of the housing compartment, and the positions and speed along the path of the container.

Advantageously, the detected parameters may comprise identifiers applied on the transported goods, if any, diagnostic data about the state of the active parts in the cover element (e.g, the battery level and the rpm of the ventilation fans).

According to one embodiment of the method of the present invention, the step of b) closing the container and the step of d) opening the container are carried upon authentication of at least two users.

It will be appreciated that, with this feature, the method of the present invention provides a certified material delivery procedure: it ensures monitoring of the transportation conditions all along the path of the containers, the operators that carry out the transportation, shipment, delivery, opening and closing operations.

The certification of the transportation process, especially for biological material, is highly advantageous, as it defines objective criteria for assessing transportation quality.

Therefore, according to an improvement, a step is provided of generating a summary document of the data recorded by the cover element, from the time in which the container has been closed to the time in which it was opened.

Thus, the report so generated will result from the conditions in which transportation occurred and may include a transportation assessment output, stating whether the detected parameters have always been below predetermined threshold values.

Therefore, according to one embodiment of the method of the present invention, a step is provided of generating alarm signals if the predetermined parameters exceed threshold values.

As discussed above, the method of the present invention provides a set of technical and organizational instruments for indisputably measuring and recording the transportation quality, which affords certification of the transportation.

It will be appreciated that the above described advantageous characteristics of the system and method of the present invention affords certification of each container 1 of the system and logic program contained therein.

Namely, the physical integrity of the container ensures that it will be generally able to detect and transmit measurements (temperature, speed, acceleration, etc.) like the certified one. The container must have such a physical construction as to ensure that any forcing or disassembling attempt will cause irremediable and visually detectable failure thereof.

Furthermore, as mentioned above, the various versions of the logic program of the container must be numbered, signed and timestamped by an external certification authority, to demonstrate to third parties that they contain no malicious code that might conceal any malfunctioning of the box.

Each data packet sent by the cover element must be digitally signed by the digital signature device, preferably by calculating and signing a Secure Hash Algorithm (SHA) of the entire data sequence to be transmitted. This is the only way to ensure that data comes from a container of the system and has not been manipulated once they reached the server. Data confidentiality is also ensured via the safe transmission channel.

These and other features and advantages of the present invention will appear more clearly from the following description of a few embodiments, illustrated in the annexed drawings, in which:
Fig. 1 shows a schematic of the container that is part of the system of the present invention;
Fig. 2 shows a schematic of the system of the present invention;
Fig. 3 shows a possible embodiment of the interface that is part of the system of the present invention;
Fig. 4 shows a block diagram of the steps of the method of the present invention;
Figs. 5A to 5d are detailed block diagrams of the various processes of a preferred embodiment of the method of the present invention.

It shall be noted that the figures annexed to the present application depict certain embodiments of the system and method of the present invention, to provide an improved understanding of its advantages and characteristics.

Therefore, these embodiments shall be simply intended to illustrate without limitation the inventive concept of the present invention, which consists in providing a certifiable system and procedure for transporting goods.

The system for transporting goods of the present invention comprises one or more containers 1 which are adapted to contain goods, which containers communicate with a remote unit 3.

Each container 1 has a housing compartment 11 for goods, which is delimited by one or more walls and has at least one opening 12, closed by a cover element 2.

As shown in the figures, each container 1 is used for transporting biological material, particularly biological sample tubes 13, such as tubes containing blood, platelets, etc.

The cover element 2 communicates with the remote unit 3 to send various parameters that it can detect, concerning both the physical conditions of the housing compartment 11 and the conditions of the container 1.

Such communication is allowed by a transmit/receive unit located within the cover 2.

The transmit/receive unit is not shown in the figures, and may be formed in accordance with methods and characteristics of the prior art.

According to a possible embodiment, the transmit/receive unit operates with the GSM/GPRS protocol, which is used on a public mobile cellular network 4.

Instead of or in combination with the above, the transmit/receive unit may establish a real-time communication with three dedicated wi-fi router, i.e. one at the point of departure of the container 1, one at the point of arrival, and one on the means of transport that transports the container 1.

Through this communication, the cover element 2 may transmit various parameters to the remote unit 3.

For example, according to a first embodiment, the cover element 2 comprises at least one sensor for detecting accelerations and inclinations on the horizontal plane, acting on the container 1.

Thus, the acceleration and inclination values are sent to the remote unit 3.

The remote unit 3 may be provided in any prior art form, but preferably consists of a cloud server.

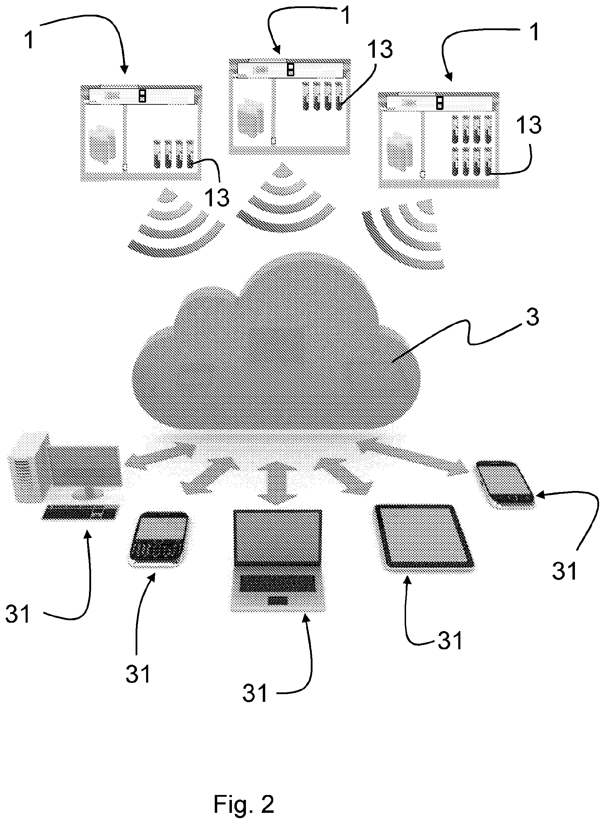

As shown in Figure 2, the cloud server 3 may be accessed through various workstations 31, which consist, for instance, of personal computers or hand-held devices using a Web browser.

The remote unit 3 may comprise a storage unit in which the data detected by the cover element are stored, as well as processor means for executing a logic program.

The execution of the logic program can provide, for example, data processing features, e.g. for determining whether the detected data fall within given threshold values.

According to a possible embodiment, the cover element 2 comprises means for detecting the temperature within the housing compartment 11. The detection means may consist, for instance, of a sensor that can sense temperature within the housing compartment 11, and transmit data to the transmit/receive unit.

As mentioned above, the temperature detection means may be provided in combination with temperature control means, i.e. with devices that actively maintain a constant temperature level within the housing compartment 11.

These control means may consist, for instance, of a thermoelectric device that communicates with the temperature-detecting sensor.

Fans may be provided in combination with these control means to generate a controlled air stream within the housing compartment, to maintain a predetermined temperature value therein.

In order to supervise operation of all the available features, the cover element 2 may have a management and control unit which, for example, stores data and transmits it through the transmit/receive unit.

Furthermore, a user interface 5 is preferably provided, which comprises at least one display unit and at least one input/output interface.

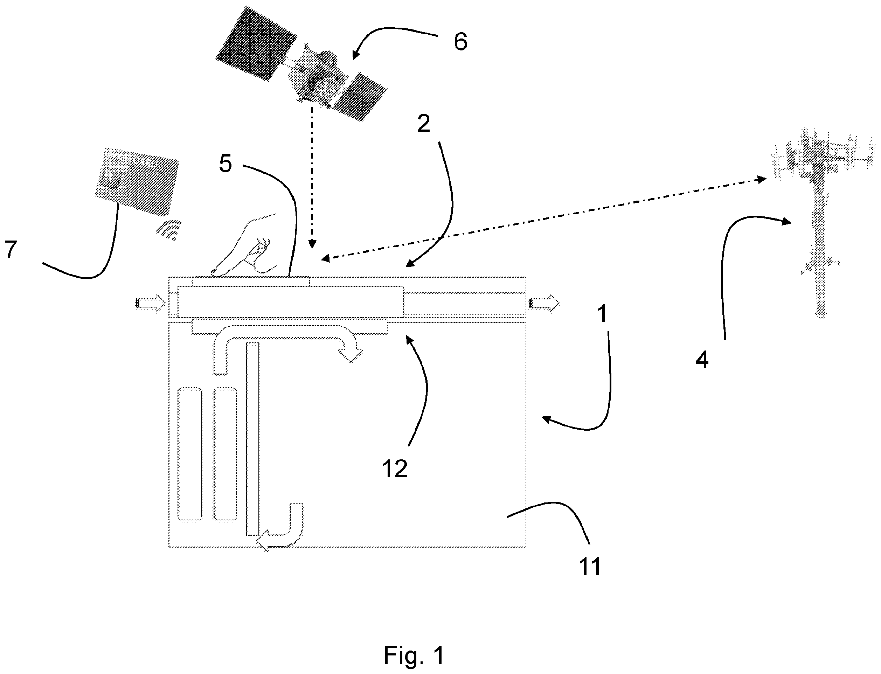

As shown in Figure 1, such user interface 5 is provided in the form of a touchscreen device.

The user interface 5 can both display data concerning the container 1, and allow the user to input certain data, such as the route to follow, the type of goods contained within the housing compartment, etc.

Advantageously, the cover element 2 has at least one geolocation unit which communicates with one or more GPRS antennas 4 and/or GPS satellites 6, for proper location of each container 1 of the system.

According to a variant embodiment, the cover element 2 comprises closure means, which are adapted to ensure fixation of the cover element 2 to the container 1 and an actuation unit for actuating the closer means. Namely, the actuation unit comprises authentication means, for authenticating at least one user.

The closure means are not shown in the figures, but may consist, for instance, of one or more pins, which engage in corresponding seats formed in the walls that the limits the housing compartment 11.

Thus, these pins will be driven by the actuation unit, e.g. an electromechanical actuator.

In order to ensure operation of the closure means, the actuation unit is actuated by authentication means which advantageously cooperate with an identification device 7 associated with the user, which hence communicates with the actuation unit.

The identification device 7 may be embodied, as shown in Figure 1, by a contactless smart card with encryption mechanisms 7, which is read by the cover element when it is proximate to the latter.

This feature is particularly useful because the closure means can be set up to allow the container 1 to be opened only when they are proximate to one or more smart cards 7 whose credentials allow the container to be opened.

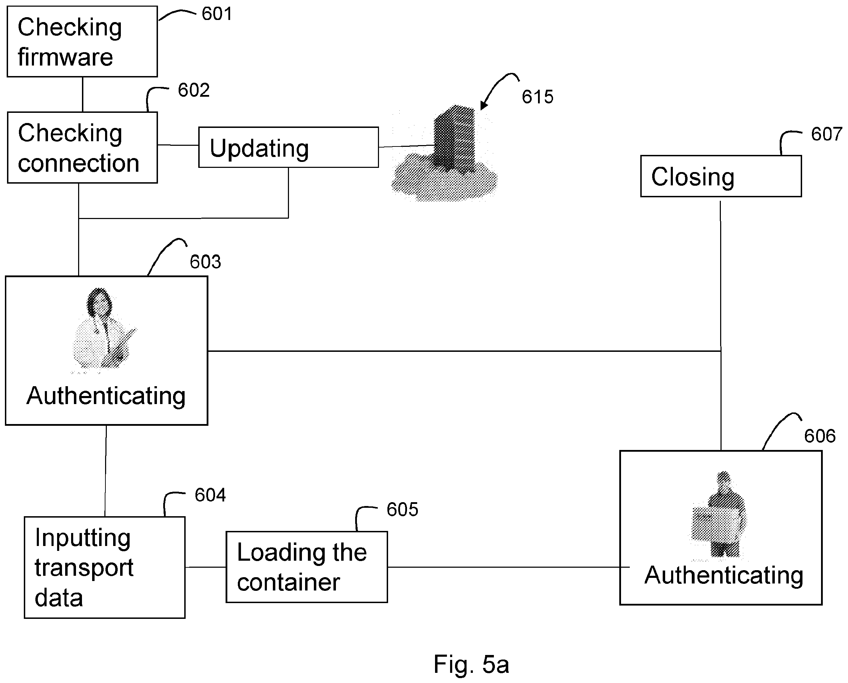

Figures 5a to 5e show this procedure in detail.

The manager of the system of the present invention may issue several smart cards 7 with different qualifications, to create an architecture of different tasks and have particular responsibilities and skills associated with each user.

This smart card or may be obviously manufactured with prior art methods, such as NFC (Near Field Communication) smart cards.

According to a further embodiment, the cover element 2 may be equipped with means for recognizing the goods contained in the housing compartment 11.

For example, if the goods are test tubes 13, a RFID tag reader may be provided to RFID tags on the test tubes 13, to detect both the number of test tubes 13 and their contents.

As described above, according to a possible embodiment the cover element 2 may be equipped with processor means for executing a logic program, which logic program has a unique identification code associated therewith.

Furthermore, the cover element 2 has a digital signature device, which digital signature device is uniquely associated with said cover element 2. The digital signature device is preferably provided in the form of a dedicated cryptographic processor (CryptoChip) with encryption features and an integrated digital signature located on board and rigidly associated with the cover 2.

Both the first identification device and the digital signature device will be manufactured with the CryptoChip technology for transport, storage and use of digital certificates for data encryption and/or digital signature, with the difference that the first identification device (smart card) is associated with a user, and the digital signature device (CryptoChip) is associated with the cover element 2.

As mentioned above, the control unit may be also provided for checking whether the data detected by the cover element 2 exceeds threshold values.

It shall be noted that the term control unit, as used herein, is intended to designate a functional unit, i.e. a feature of the logic program contained in the cover element and/or the software executed on the remote unit.

Therefore, the control unit may be provided both in the remote unit 3 and in the cover element 2.

The above description, particularly referring to Figure 2, clearly illustrates the operation of the system of the present invention.

The containers 1 communicate with the remote unit 3 to send the parameters that the cover element 2 can detect.

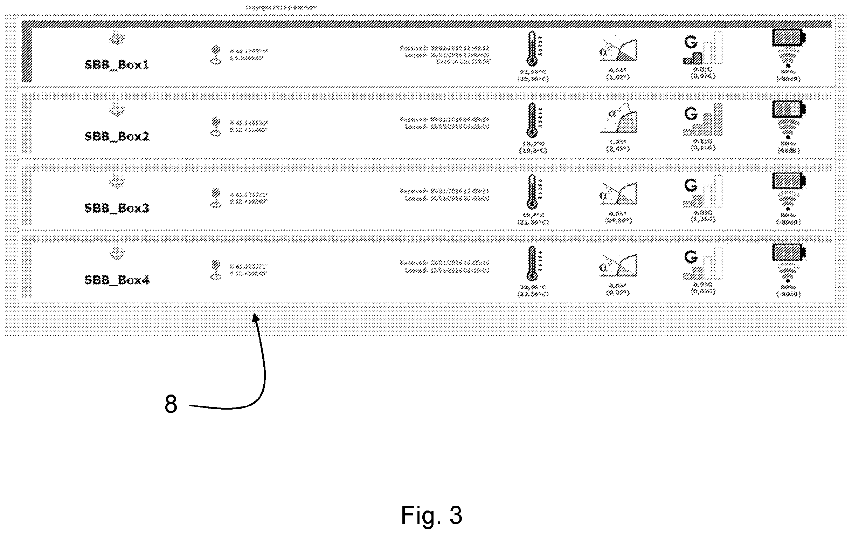

The remote unit 3 stores these parameters and makes them available for display through a Web interface, as shown in Figure 3.

Therefore, the state of each container 1 of the system may be displayed through the Web interface.

Therefore, the Web interface allows display of the list of containers 1 and the relevant parameters detected therefor.

The parameters are obviously sent in real time, whereby changes may be displayed from time to time for each container 1.

The above disclosure clearly shows that the system of the present invention can provide an arrangement for monitoring the quality of transportation of goods.

Nevertheless, since any kind of parameters may be transmitted by the cover element 2 to the remote unit 3, the cover element 2 may be also envisaged to transmit operational parameters of its parts, such as fans, sensors, actuators, batteries, etc.

The transmission of these operational parameters can provide a parallel arrangement for maintenance of the containers 1, namely the cover elements 2.

Therefore, the user that manages the whole system will be given an overview of the operational state of all the cover elements 2 of the system, which will provide an arrangement for preventive management, that will add efficiency to the system of the present invention.

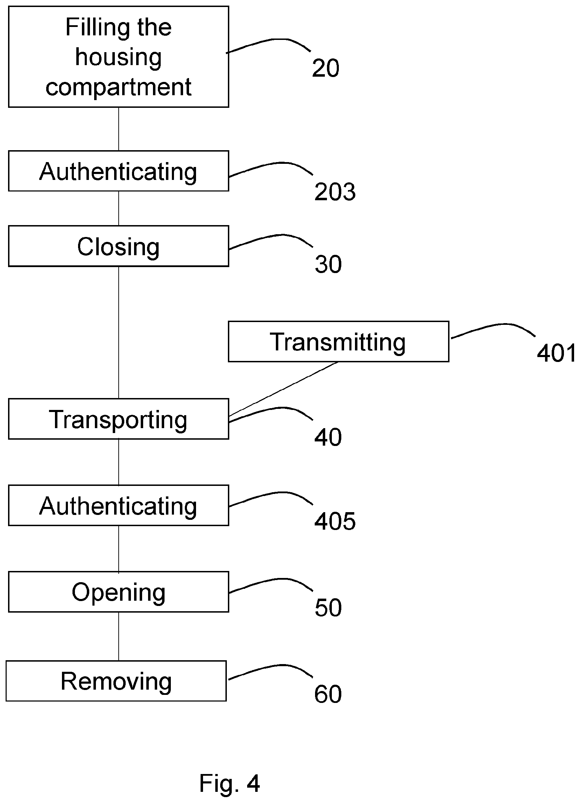

Figure 4 shows a block schematic of the method of the present invention, namely a method of transporting goods and services, that uses the above described system.

Particularly referring to Figure 4, the method includes the steps of:
a) introducing the goods into at least one container, referenced 20,
b) closing the container, referenced 30,
c) transporting the container, referenced 40,
c) opening the container, referenced 50,
e) removing the goods from the container, referenced 60.

It shall be noted that, while the method steps as described below relate to a single container, given the above described features and particularly referring to Figure 2, the method can be also obviously implemented for a plurality of containers.

Particularly referring to the method of the present invention, a user of the system introduces the goods to be transported into the housing compartment 11 of the container, and closes, step 30, the container 1.

The container is ready for shipment and preferably, as soon as transportation begins, step 40, the container starts to transmit, step 401, predetermined parameters detected by the cover element 2 to the remote unit 3.

As mentioned above, the parameters may be of any type, but preferably include accelerations acting on the container, the temperature of the housing compartment, and the path of the container.

Also, as described above, these parameters may include inclinations of the container, position, speed, data concerning the operation of the parts of the cover element, any alarms for values exceeding thresholds or for tamper events.

The transmission step 401 will be carried out throughout the entire transportation route, preferably in real time.

If no connection is available, the cover element stores the detected data and transmits it to the remote unit 3 as soon as it detects a connection.

According to a preferred variant embodiment, the transmission of the predetermined parameters includes a step, prior to transmission, of c1) associating a digital signature generated by the digital signature device with these parameters.

Advantageously, the generation of the digital signature comprises associating a unique code of the digital signature device, the unique identification code of the logic program and a timestamp with these parameters.

According to a further variant embodiment, the transmission of the predetermined parameters includes a step, after transmission, of c2) storing the parameters by the remote unit 3, such storage including the generation of a storage code for the stored data.

According to a preferred variant embodiment, the closing step once the housing compartment, referenced 30, has been filled, may be carried out upon authentication by two users, step 203.

With the smart code device 7 as shown and described with reference to Figure 1, if the cover element senses the presence of two enabled users, i.e. having smart cards 7 enabled for opening and closing the container 1, it will actuate the closing means.

Consider the exemplary case blood samples shipped from a blood drawing center to a blood test center.

A user of the blood drawing center will have a smart card 7 which identifies his/her qualification, in this case the qualification to check the samples before shipment.

Likewise, a user qualified for transportation will also own a smart card 7 defining his/her responsibilities

Therefore, the closure means are designed not to be actuated until the presence of both users is sensed, so that both will check the material contained in the housing compartment 11.

Figures 5a to 5e show this procedure in detail.

The procedure may be carried out during the opening step 50 prior to removal of the goods 60; an additional authentication step 405 is provided, this time between the user qualified for transportation and a user of the test center that receives the container.

Thus, the shipment and delivery of the container may be controlled by two users at the same time, which ensures that each user guarantees for the other, thereby increasing the reliability of the system as a whole.

Control during transportation is allowed by the communication between the remote unit 3 and the cover element 2, which transmits all the relevant parameters.

As mentioned above, each data unit, including the information about the parts of the cover element 2 and its firmware, and the telemetry data (payload) may be timestamped, the timestamp being stored in the remote unit 3 according to predetermined and selectable time sequences.

According to one embodiment of the method of the present invention, each version of the logic program may be stored and dated by a signature and a timestamp added by a certification authority.

The timestamp allows a third party to obtain the source code of each version of the logic program, if the logic program that has been used to transmit a given data unit is suspected to conceal some malicious code that is designed to hide any malfunctioning of the container.

Furthermore, for each significant change in the logic program a new certification may be obtained - possibly by a third party - certifying that the container 1 is able to control and monitor temperature, and signaling any alarms.

Advantageously, as the container 1 is turned on, the cover element 2 provides the current unique identification code of the logic program, and adds it to each data packet transmitted to the remote unit 3. This will provide the knowledge of which version of the logic program has processed each data packet that has been received.

Based on the above description, before or during delivery of the container, a step is provided of generating a summary document of the data recorded by the cover element 2, from the time in which the container 1 has been closed to the time in which the container 1 has been delivered.

With this step, the quality of transportation can be certified and it is possible to assess whether the transported sample may be used for valid medical testing, in case of transportation of biological samples.

It shall be noted that all the data detected by the cover elements of the various containers of the system are stored in the storage unit, which allows reuse of such data also, with particular reference to transportation of biological materials, also in view of the medical testing performed on the samples.

Advantageously, a step may be provided of generating alarm signals if the predetermined parameters exceed threshold values.

Obviously, these alarms may be included in the summary document that has been generated upon delivery, such that particular temperature jumps or accelerations may be tracked.

It will be appreciated that the variety of types of information that can be detected and the variety of responsibilities that can be assigned to the operators of the system impart high customization, modularity and implementation flexibility to the system, to obtain a certified delivery procedure.

For example, when alarms are generated as a result of values exceeding threshold values, a responsible person with a corresponding smart card 7 may be identified, who can validate the delivery and take responsibility for acceptance of the container in spite of the parameters that have been detected.

It will also be appreciated that all the steps are tracked and each qualification and each user is defined from shipment to delivery of the container.

Figures 5a to 5e show in greater detail a preferred variant embodiment of the method of the present invention, particularly referring to transportation of biological material, with special reference to the steps of the method of the present invention:
Figure 5a relates to the loading step, i.e. introducing the goods into the container;

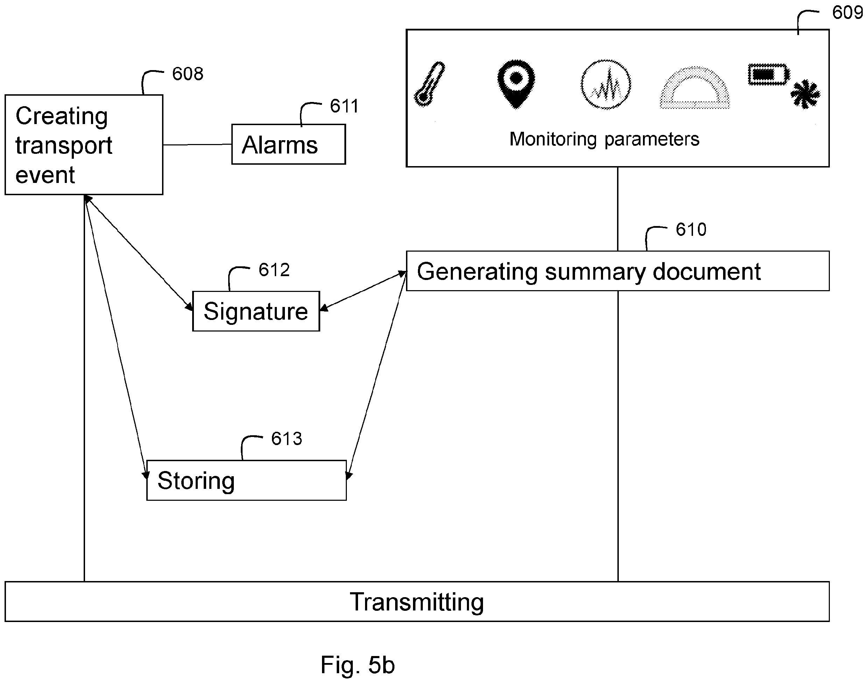

Figure 5b relates to the step of transporting the container;

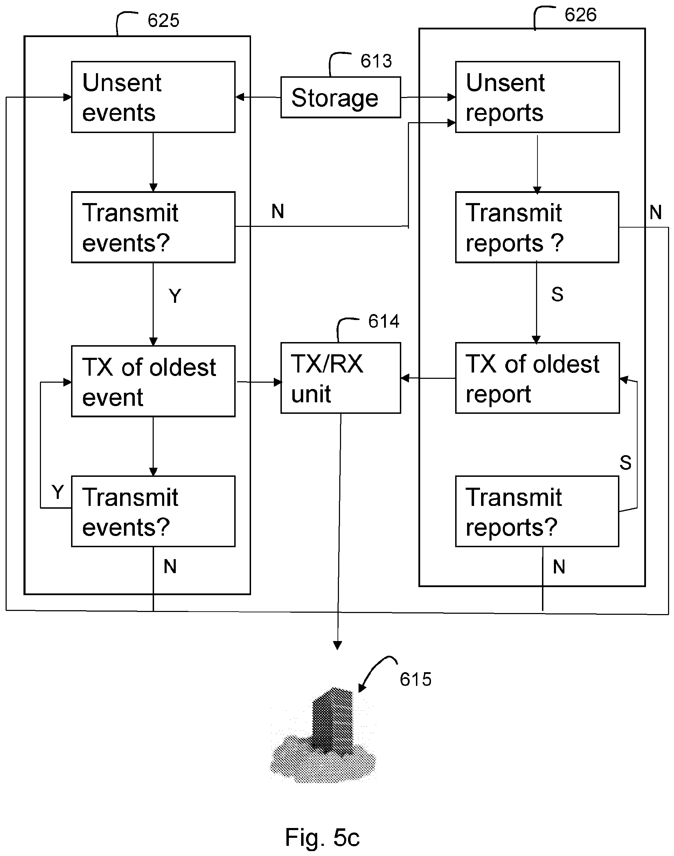

Figure 5c relates to the step of transmitting information from the container to the remote unit;

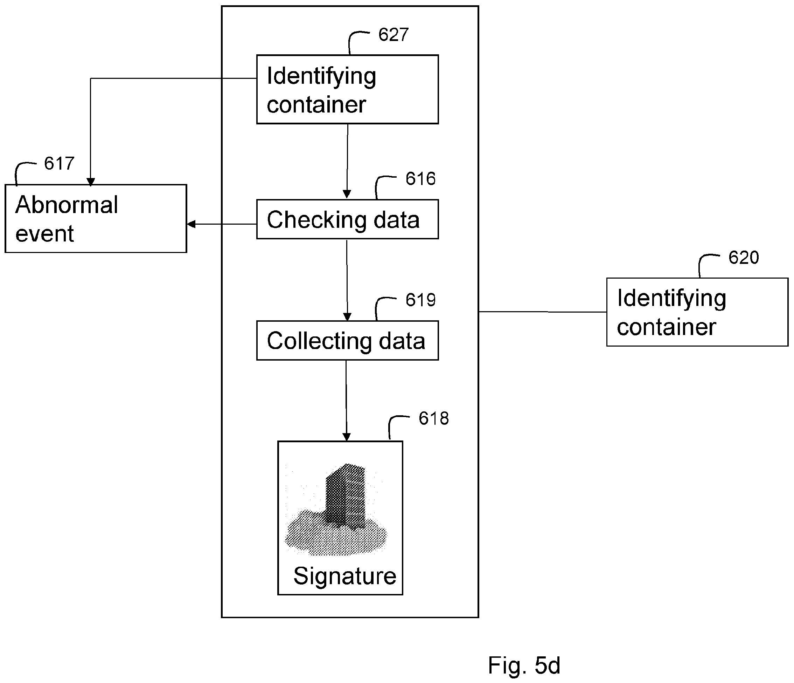

Figure 5d relates to the step of receiving the information transmitted from the container to the remote unit;

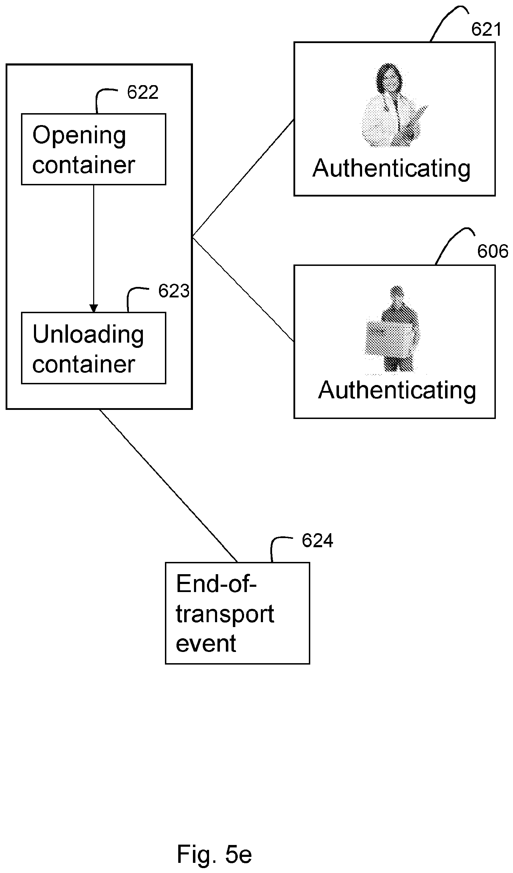

Figure 5e relates to the unloading step, i.e. delivering the contained in the container;
Figure 5a shows the step of introducing the samples to be transported into the container 1.

This step is generally carried out in a blood drawing center and its actors are a blood drawing center operator 603 and a sample transportation operator 606.

The container 1 is turned on and starts an internal diagnostics action, referenced 601, to determine the version of the logic program installed therein.

Then, the receive/transmit unit detects whether a connection is available, referenced 602; if it is the cover element connects to the remote unit to update the date in the cover element, particularly the data concerning the operators (qualification/enabled/disabled) and their identifiers.

The blood drawing center operator 603 presents a smart card that can uniquely identify the operator and can enable the operator to carry out certain operations on the container 1.

Once the blood drawing center operator has been recognized, he/she can interact with the container through an interface, like the above described touch screen interface, and can set certain commands, including the input of the shipment address, referenced 604.

The container is opened and the goods to be transported are introduced therein, step 605.

The block 605 groups a set of actions that can be taken especially when delivering biological material.

In this case, the container is opened, heat-absorbing elements, such as eutectic plates, are introduced therein, the container is closed and the housing compartment thereof is allowed to reach the ideal temperature conditions for transporting the biological material.

As optimal temperature conditions are achieved, the biological material to be transported is introduced.

At the end of block 605, the container is ready for shipment.

Before validating shipment, the sample transportation operator606 is identified by the presence of the smart card associated with him/her and the actions that he/she may carry out on the container are enabled.

The simultaneous presence of the smart card associated with the blood drawing center operator and the smart card associated with the sample transportation operator 606 allows actuation of the closure means, and allows the container to be closed, referenced 607.

Thus, the container is ready for transportation, as shown in Figure 5b.

Figure 5b shows the various steps that are carried out during transportation of the container.

As mentioned above, during transportation data is transmitted/received between the container and the remote unit, as described in greater detail with reference to figures 5c and 5d.

Particularly referring to Figure 5d, each transport may be identified by creating an event designated by the following parameters, and referenced 608:
time and day of the transport,
identification number of the transport (generally a progressively generated number),
identification number of the blood drawing center,
identification number of the blood drawing center operator,
identification number of the sample transportation operator,
identification number of the test laboratory operator,
identification number of the container,
identification number of the logic program version.

Each "transport event" is obviously associated with monitoring of parameters within a time interval.

Each transport includes monitoring of relevant parameters, temperature, position, stresses and operation of the parts of the cover element, referenced 609.

The values of these parameters are recorded during a transportation period and these values can be used to generate a summary document of the recorded data, referenced 610.

Such summary document is generated with reference to a monitoring period, which may be the whole transportation period, otherwise multiple monitoring periods may be provided during transportation, according to the implementation needs of the system.

Preferably, the summary document will have the following values:
dates and times of the start and end of the monitoring interval,
latitude/longitude at the end of the monitoring interval,
maximum and minimum temperatures within the monitoring interval,
maximum and minimum speeds within the monitoring interval,
maximum acceleration within the monitoring interval,
maximum inclination within the monitoring interval,
battery level and operational values of the container parts within the monitoring interval,
identification number of the container,
identification number of the logic program version.

Advantageously, the method of the present invention includes a step of generating alarm signals if the predetermined parameters exceed threshold values, referenced 611.

Therefore, an alarm event is created, preferably containing the following information:
dates and times of the start and end of the interval in which the threshold value was exceeded,
indication of the parameter that exceeded the threshold value,
the threshold value associated therewith,
the measured value,
identification number of the container,
identification number of the logic program version.

Each transport event, each summary document and each alarm event may be stored in a storage unit located in the cover element of the container, referenced 613.

Furthermore, each transport event, each summary document and each alarm event is designated by a digitally signed sequence (SHA-DIGEST), 612, which can be obtained due to the provision of the above described digital signature device, before transmission, to be uniquely related to the container that is responsible for transmission of the data, which will prevent them from being tampered.

Advantageously, one copy of the transmission is kept in the storage unit, once it has been digitally signed, to guarantee that it will be maintained regardless of its transmission over the air: local data is signed and timestamped before being stored in the storage unit.

Once the data has been signed and stored, it is transmitted to the remote unit, see Figure 5c.

Particularly referring to Figure 5c, the transmission of data from the container to the remote unit is depicted.

The transmit/receive unit 614 is responsible for transmission of data to the remote unit 615.

As mentioned above, each data unit is stored in the container, particularly in the storage unit that is part of the cover element of each container, once it has been digitally signed with a timestamp (GSM/GPS time) by means of the digital signature device 612, to create an inalterable stored data set.

Preferably, the stored data is sent to the transmission unit 614 in predetermined time sequences, for such unit to transmit it to the remote unit 615 as soon as a connection is available.

The transmission process is clearly shown in Figure 5c, the transmission of events being referenced 625 and the transmission of reports being referenced 626.

As soon as a connection is available, it is determined whether the storage unit contains events that have not been sent: if it does, such events are sent with the less recent event being assigned the highest priority, until all the unsent events have been transmitted.

Once all the events have been transmitted, the transmission unit 614 will transmit the summary documents, i.e. the reports, that have not been transmitted, in the same manner as the events.

Obviously, the transmission process is cyclic, i.e. once all the reports have been transmitted, event transmission starts again.

Figure 5d shows the process of receiving data from the remote unit 615.

The remote unit 615 receives data from the container, checks whether the container is an enabled container 627, i.e. whether it is recorded in the list of containers of the system.

If it is not, an abnormal event 617 is recorded, which may be notified to the system manager user.

If it is, the transmitted data is checked for validity, step 616, based on the digital signature added by the container.

The validity check 616 may be performed according to any prior art method, but it is preferably provided by asymmetric encryption, using public and private keys.

If data validity is not confirmed, then an abnormal event 617 is recorded. Conversely, the transmitted data is stored for later certification by an external certification authority 618.

The data received by the remote unit from all the containers of the system, are collectively packed 619 at predetermined time intervals, and the overall packet is timestamped and signed by an external certification authority 618 for any further tamper to be highlighted.

Then, the certified data are saved and stored for display by the users of the system 620.

Obviously, data may be accessed in various manners, but always require prior authentication of the user enabled for viewing such data.

Figure 5e shows the procedure of delivery of the container by the sample transportation operator 606 to the test laboratory operator 621.

The operator 606 and the operator 621 will be identified through the first identification device, i.e. the contactless smart card.

A summary document of the transport data is displayed and the container is opened, step 622.

Then, products are removed from the container, step 623.

The step 623 may include substeps for cleaning the container, confirming that the container is empty and closed again, still upon authentication of the operators 606 and 621.

Now, an event may be generated, in association with the end of the transport 624, in the same manner as the above described events have been generated.

In this case, the "end-of-transport" event will preferably include the following data:
date and time of the event,
identification number of the event (generally a progressively generated number),
identification number of the test laboratory,
identification number of the test laboratory operator,
identification number of the sample transportation operator,
identification number of the transportation operator,
identification number of the container,
identification number of the logic program version.

Similarly to what has been described above, particularly referring to Figure 5b, the "end-of-transport event" will be signed with the digital signature device associated with the container and stored therein. Finally, the end-of-transport event may be transmitted according to the transmission and reception description related to Figures 5c and 5d.

## Claims

1. A system for transporting goods comprising one or more containers (1) which are adapted to contain goods, which containers communicate with a remote unit (3),
each container (1) having a housing compartment (11) for goods, which housing compartment (11) is delimited by one or more walls and has at least one opening (12), which opening (12) is closed by a cover element (2),
said cover element (2) comprising at least one sensor for detecting accelerations acting on the container (1),
said cover element (2) having at least one transmit/receive unit for communication with said remote unit (3),
**characterized in that**
said cover element (2) comprises closure means, which are adapted to ensure fixation of said cover element (2) to said container (1) and an actuation unit for actuating said closure means,
said actuation unit comprising authentication means, for authenticating at least two users,
said authentication means cooperating with two identification devices, each identification device being associated to a user, which identification device communicates with the actuation unit, in such a way that the container opening or closing operations are actuated upon the simultaneous presence of two identification devices.

2. A system as claimed in claim 1, wherein said cover element (2) comprises means for detecting the temperature within said housing compartment (11).

3. A system as claimed in claim 1, wherein said cover element (2) has means for recognizing the goods contained in the housing compartment (11).

4. A system as claimed in claim 1, wherein a control unit is provided for checking whether the data detected by said cover element (2) exceeds threshold values.

5. A system as claimed in claim 1, wherein said cover element (2) has processor means for executing a logic program, which logic program has a unique identification code associated therewith.

6. A system as claimed in claim 1, wherein said cover element (2) has a digital signature device uniquely associated with said cover element (2).

7. A method of transporting goods using the system for transporting goods as claimed in one or more of the preceding claims 1 to 6, which method includes the steps of:
a) introducing the goods into at least one container (20),
b) closing the container (30),
c) transporting the container (40),
d) opening the container (50),
e) removing the goods from the container (60),
the step of c) transporting a container including transmitting predetermined parameters detected by the cover element (2) to at least one remote unit (3),
**characterized in that**
steps b) and d) are carried out upon simultaneous authentication of two users.

8. A method as claimed in claim 7, wherein the transmission of the predetermined parameters includes a step, prior to transmission, of c1) associating a digital signature generated by the digital signature device with said parameters.

9. A method as claimed in claim 8, wherein the generation of the digital signature comprises associating a unique code of the digital signature device, the unique identification code of the logic program and a timestamp with said parameters.

10. A method as claimed in claim 7, wherein the transmission of predetermined parameters includes, after transmission, a step of c2) storing the parameters by the remote unit (3),
said storing step including the generation of a storage code for the stored data.

11. A method as claimed in claim 10, wherein, after the storing step c2), a step may be provided of c3) adding a timestamp.

12. A method as claimed in claim 7, wherein the predetermined parameters include accelerations and inclinations acting on the container, the temperature of the housing compartment and the path of the container.

13. A method as claimed in claim 7 wherein a step is provided of generating a summary document of the data recorded by said cover element (2), from the time in which the container (1) has been closed to the time in which it was opened.

14. A method as claimed in claim 7, wherein a step is provided of generating alarm signals if the predetermined parameters exceed threshold values.

## Patentansprüche

1. System zum Transportieren von Gütern, das einen oder mehrere Behälter (1) umfasst, die angepasst sind, Güter zu enthalten, wobei die Behälter mit einer entfernten Einheit (3) kommunizieren,
wobei jeder Behälter (1) einen Aufnahmeraum (11) für Güter aufweist, wobei der Aufnahmeraum (11) durch eine oder mehrere Wände begrenzt ist und mindestens eine Öffnung (12) aufweist, wobei die Öffnung (12) durch ein Abdeckelement (2) geschlossen ist,
wobei das Abdeckelement (2) mindestens einen Sensor zum Detektieren von Beschleunigungen, die auf den Behälter (1) wirken, umfasst,
wobei das Abdeckelement (2) mindestens eine Sende-/Empfangseinheit für die Kommunikation mit der entfernten Einheit (3) aufweist,
**dadurch gekennzeichnet, dass**
das Abdeckelement (2) Schließmittel, die angepasst sind, die Befestigung des Abdeckelements (2) am Behälter (1) sicherzustellen, und eine Betätigungseinheit zum Betätigen der Schließmittel umfasst,
wobei die Betätigungseinheit Authentifizierungsmittel zum Authentifizieren von mindestens zwei Benutzern umfasst,
wobei die Authentifizierungsmittel mit zwei Identifikationsvorrichtungen zusammenwirken, wobei jede Identifikationsvorrichtung mit einem Benutzer verknüpft ist, wobei die Identifikationsvorrichtung mit der Betätigungseinheit derart kommuniziert, dass Öffnungs- oder Schließvorgänge am Behälter nach dem gleichzeitigen Vorhandensein von zwei Identifikationsvorrichtungen vorgenommen werden.

2. System nach Anspruch 1, wobei das Abdeckelement (2) Mittel zum Detektieren der Temperatur im Aufnahmeraum (11) umfasst.

3. System nach Anspruch 1, wobei das Abdeckelement (2) Mittel zum Erkennen der Güter, die im Aufnahmeraum (11) enthalten sind, aufweist.

4. System nach Anspruch 1, wobei zum Prüfen, ob die Daten, die vom Abdeckelement (2) detektiert werden, Schwellwerte überschreiten, eine Steuereinheit vorgesehen ist.

5. System nach Anspruch 1, wobei das Abdeckelement (2) zum Ausführen eines Logikprogramms Prozessormittel aufweist, wobei das Logikprogramm einen eindeutigen Identifikationscode, der mit demselben verknüpft ist, aufweist.

6. System nach Anspruch 1, wobei das Abdeckelement (2) eine digitale Signaturvorrichtung aufweist, die mit dem Abdeckelement (2) verknüpft ist.

7. Verfahren zum Transportieren von Gütern unter Verwendung des Systems zum Transportieren von Gütern nach einem oder mehreren der vorhergehenden Ansprüche 1 bis 6, wobei das Verfahren die folgenden Schritte beinhaltet:
a) Platzieren der Güter in mindestens einem Behälter (20),
b) Schließen des Behälters (30),
c) Transportieren des Behälters (40),
d) Öffnen des Behälters (50),
e) Entfernen der Güter aus dem Behälter (60),
wobei der Schritt des c) Transportierens eines Behälters das Übertragen von vorbestimmten Parametern, die vom Abdeckelement (2) detektiert werden, zu mindestens einer entfernten Einheit (3) beinhaltet,
**dadurch gekennzeichnet, dass**
die Schritte b) und d) nach der gleichzeitigen Authentifizierung von zwei Benutzern umgesetzt werden.

8. Verfahren nach Anspruch 7, wobei das Übertragen der vorbestimmten Parameter vor dem Übertragen einen Schritt des c1) Verknüpfens einer digitalen Signatur, die von der digitalen Signaturvorrichtung erzeugt wird, mit den Parametern beinhaltet.

9. Verfahren nach Anspruch 8, wobei das Erzeugen der digitalen Signatur das Verknüpfen eines eindeutigen Codes der digitalen Signaturvorrichtung, des eindeutigen Identifikationscodes des Logikprogramms und eines Zeitstempels mit den Parametern umfasst.

10. Verfahren nach Anspruch 7, wobei das Übertragen von vorbestimmten Parametern nach dem Übertragen einen Schritt des c2) Speicherns der Parameter durch die entfernte Einheit (3) beinhaltet,
wobei der Speicherschritt das Erzeugen eines Speichercodes für die gespeicherten Daten beinhaltet.

11. Verfahren nach Anspruch 10, wobei nach dem Speicherschritt c2) ein Schritt des c3) Hinzufügens eines Zeitstempels vorgesehen werden kann.

12. Verfahren nach Anspruch 7, wobei die vorbestimmten Parameter Beschleunigungen und Neigungen, die auf den Behälter wirken, die Temperatur des Aufnahmeraums und den Pfad des Behälters beinhalten.

13. Verfahren nach Anspruch 7, wobei ein Schritt des Erzeugens eines Übersichtsdokuments der Daten, die vom Abdeckelement (2) von der Zeit, zu der der Behälter (1) geschlossen wurde, bis zu der Zeit, zu der er geöffnet wurde, aufgezeichnet wurden, vorgesehen ist.

14. Verfahren nach Anspruch 7, wobei ein Schritt des Erzeugens von Alarmsignalen, wenn die vorbestimmten Parameter die Schwellwerte überschreiten, vorgesehen ist.

## Revendications

1. Système de transport de marchandises comprenant un ou plusieurs conteneurs (1) qui sont adaptés pour contenir des marchandises, ces conteneurs communiquant avec une unité distante (3),
chaque conteneur (1) ayant un compartiment de logement (11) pour des marchandises, lequel compartiment de logement (11) est délimité par une ou plusieurs parois et a au moins une ouverture (12), laquelle ouverture (12) est fermée par un élément de couvercle (2),
ledit élément de couvercle (2) comprenant au moins un capteur pour détecter des accélérations agissant sur le conteneur (1),
ledit élément de couvercle (2) ayant au moins une unité d'émission/de réception pour communiquer avec ladite unité distante (3),
**caractérisé en ce que**
ledit élément de couvercle (2) comprend des moyens de fermeture, qui sont adaptés pour assurer la fixation dudit élément de couvercle (2) audit conteneur (1) et une unité d'actionnement pour actionner lesdits moyens de fermeture,
ladite unité d'actionnement comprenant des moyens d'authentification, pour authentifier au moins deux utilisateurs,
lesdits moyens d'authentification coopérant avec deux dispositifs d'identification, chaque dispositif d'identification étant associé à un utilisateur, lequel dispositif d'identification communique avec l'unité d'actionnement, de telle sorte que les opérations d'ouverture ou de fermeture du conteneur sont actionnées lors de la présence simultanée de deux dispositifs d'identification.

2. Système selon la revendication 1, où ledit élément de couvercle (2) comprend des moyens pour détecter la température à l'intérieur dudit compartiment de logement (11).

3. Système selon la revendication 1, où ledit élément de couvercle (2) a des moyens pour reconnaître les marchandises contenues dans le compartiment de logement (11).

4. Système selon la revendication 1, où une unité de commande est prévue pour vérifier si les données détectées par ledit élément de couvercle (2) dépassent les valeurs de seuil.

5. Système selon la revendication 1, où ledit élément de couvercle (2) a des moyens de processeur pour exécuter un programme logique, lequel programme logique a un code d'identification unique associé à celui-ci.

6. Système selon la revendication 1, où ledit élément de couvercle (2) a un dispositif de signature numérique associé uniquement audit élément de couvercle (2).

7. Procédé de transport de marchandises utilisant le système de transport de marchandises selon l'une ou plusieurs des revendications 1 à 6 précédentes, lequel procédé comprend les étapes de :
a) introduction des marchandises dans au moins un conteneur (20),
b) fermeture du conteneur (30),
c) transport du conteneur (40),
d) ouverture du conteneur (50),
e) retrait des marchandises du conteneur (60),
l'étape de c) transport d'un conteneur comprenant la transmission de paramètres prédéterminés détectés par l'élément de couvercle (2) à au moins une unité distante (3),
**caractérisé en ce que**
les étapes b) et d) sont effectuées lors de l'authentification simultanée de deux utilisateurs.

8. Procédé selon la revendication 7, où la transmission des paramètres prédéterminés comprend une étape, avant la transmission, de c1) association d'une signature numérique générée par le dispositif de signature numérique auxdits paramètres.

9. Procédé selon la revendication 8, où la génération de la signature numérique comprend l'association d'un code unique du dispositif de signature numérique, le code d'identification unique du programme logique et un horodatage auxdits paramètres.

10. Procédé selon la revendication 7, où la transmission de paramètres prédéterminés comprend, après la transmission, une étape de c2) stockage des paramètres par l'unité distante (3),
ladite étape de stockage comprenant la génération d'un code de stockage pour les données stockées.

11. Procédé selon la revendication 10, où, après l'étape de stockage c2), une étape peut être fournie de c3) ajout d'un horodatage.

12. Procédé selon la revendication 7, où les paramètres prédéterminés comprennent des accélérations et des inclinaisons agissant sur le conteneur, la température du compartiment de logement et le trajet du conteneur.

13. Procédé selon la revendication 7, où une étape est prévue pour générer un document récapitulatif des données enregistrées par ledit élément de couvercle (2), depuis le moment où le conteneur (1) a été fermé jusqu'au moment où il a été ouvert.

14. Procédé selon la revendication 7, où une étape est prévue pour générer des signaux d'alarme si les paramètres prédéterminés dépassent des valeurs de seuil.
